# EUROPÄISCHE PATENTSCHRIFT

(11) **EP 1 641 641 B1**
(45) Veröffentlichungstag und Bekanntmachung des Hinweises auf die Patenterteilung: **01.09.2010**
(21) Anmeldenummer: 04739739.3
(22) Anmeldetag: 09.06.2004
(51) Int. Cl.: B60H 1/00, B60H 1/24

(54) **BELÜFTUNGSVORRICHTUNG, INSBESONDERE FÜR EINE HEIZUNG ODER KLIMAANLAGE EINES KRAFTFAHRZEUGS**
VENTILATION DEVICE, ESPECIALLY FOR A HEATING OR AIR CONDITIONING SYSTEM OF A MOTOR VEHICLE
DISPOSITIF DE VENTILATION, EN PARTICULIER POUR UNE INSTALLATION DE CHAUFFAGE OU DE CLIMATISATION D'UN VEHICULE AUTOMOBILE

(30) Priorität: 30.06.2003 DE 10329492
(43) Veröffentlichungstag der Anmeldung: 05.04.2006
(73) Patentinhaber: Behr GmbH & Co. KG, 70469 Stuttgart (DE)
(72) Erfinder: DIEKSANDER, Wolfgang, 70794 Filderstadt (DE); HÖRIG, Harald, 76476 Bischweier (DE); KOUKOURAVAS, Evripidis, 72654 Neckartenzlingen (DE)
(74) Vertreter: Grauel, Andreas
(86) Internationale Anmeldenummer: PCT/EP2004/006232
(87) Internationale Veröffentlichungsnummer: WO 2005/000610

(56) Entgegenhaltungen:
- EP-A- 0 781 673
- EP-A- 0 911 196
- EP-A- 1 319 541
- DE-A- 10 109 240
- DE-A- 10 127 347

## Beschreibung

Die Erfindung betrifft eine Belüftungsvorrichtung, insbesondere für eine Heizung oder Klimaanlage eines Kraftfahrzeugs, gemäß dem Oberbegriff des Anspruchs 1.

Bei Klimaanlagen gemäß dem Stand der Technik werden die Öffnungen derselben in verschiedene Kanalabgänge, wie zum Beispiel zu einer Seitendüse, zum Defrosten der Windschutzscheibe, in den Fussraum, zur Mitteldüse, zur Fondbelüftung, herkömmlicher Weise mit Klappen verschlossen. Sind hierbei beispielsweise bei einer Klimaanlage Öffnungen für den Front-Fussraum und den Fond-Fussraum vorgesehen, so sind in der Regel beide Kanalabgänge mit separaten Klappen versehen, die miteinander gekoppelt sind. Ferner haben die einzelnen Klappen in der Regel die gleiche Steuerungscharakteristik. Die Kopplung erfolgt meist, indem die Klappen ohne kinematische Übersetzung miteinander gekoppelt sind. Ist die Fussraum-Klappe im Front-Bereich geschlossen, so ist auch die Fussraum-Klappe im Fond-Bereich geschlossen.

Ist noch ein zusätzlicher Fond-Belüftungs-Abgang vorgesehen, so kann in diesen ebenfalls eine Klappe integriert sein, welche den Abgang versperren kann. Die Klappe muss jedoch im geschlossen Zustand nicht dichtend ausgebildet sein, sondern es kann auch eine Drosselklappe verwendet werden, die z.B. nur zu 90% schließt und stets einen definierten Luftstrom durchlässt.

Üblicherweise werden die Fond-Belüftungs-Klappe(n) mit der bzw. den Front-Fussraum-Klappe(n) gekoppelt, wenn die Fond-Belüftungs-Klappe(n) keinen eigenen Stellantrieb aufweisen. Die Kopplung der einzelnen Klappen erfolgt in der Regel außen am Klimagerät, beispielsweise mittels Verbindungsstangen. Angesteuert werden die Klappen mittels Stellantrieben, wie z.B. Schrittverstellmotoren, U-Dosen, Bowdenzügen, Flexwellen. Dabei kann eine Kopplung mit anderen Klappen, wie z.B. der Temperaturklappe mit der Fond-Belüftungs-Klappe oder der Front-Fussraum-Klappe mit der Seitendüsen-Klappe, erfolgen.

Nachteilig bei den bekannten Belüftungsvorrichtungen ist, dass eine Kopplung zwischen den einzelnen Klappen erforderlich ist, die zu einem vergrößerten Platzbedarf führt.

In EP 0 781 673, das als nächstliegender Stand der Technik angesehen wird, ist eine Belüftungsvorrichtung, insbesondere für eine Heizungs- oder Klimaanlage eines Kraftfahrzeugs, offenbart welche ein Gehäuse aufweist, in dem Klappen zur Steuerung der Luftzufuhr zum Fahrzeuginnenraum vorgesehen sind, welche über Abgänge Luft einzelnen Luftkanälen, die zum Fahrzeuginnenraum führen, zuführt, wobei eine zentrale Fussraum-Klappe den Luftstrom über einzelne Luftkanäle zum Front-Fussraum und zum Fond-Fussraum des Fahrzeuginnenraums steuert. Eine derartige zentrale Klappe hat den Vorteil, dass mindestens eine Klappe gegenüber dem Stand der Technik eingespart werden kann. Dies ermöglicht unter anderem eine Reduzierung des erforderlichen Bauraums. Die Montage vereinfacht sich.

Es ist Aufgabe der Erfindung, eine weiterhin verbesserte Belüftungsvorrichtung zur Verfügung zu stellen, um eine weitere Reduzierung des erforderlichen Bauraums zu schaffen.

Diese Aufgabe wird gelöst durch eine Belüftungsvorrichtung mit den Merkmalen des Anspruchs 1. Vorteilhafte Ausgestaltungen sind Gegenstand der Unteransprüche. Erfindungsgemäß zweigen die Luftkanäle zu den einzelnen Auslassöffnungen zum Front-Fussraum und zum Fond-Fussraum des Fahrzeuginnenraums in Luftströmungsrichtung gesehen nach der zentralen Fussraum-Klappe vom zentralen Bereich des Gehäuses ab.

Im Falle einer Mehrzonen-Klimaanlage ist die Anordnung bevorzugt so auszuführen, dass ein Überströmen der Luft von der einen Zone in die andere Zone nicht erfolgt, wobei in der Regel eine geringe Leckluft zulässig sein kann. Hierfür wird meist eine zweigeteilte Klappe verwendet. Andere Ausführungen sind möglich.

Die Luftkanäle verzweigen sich nach der Klappe, wodurch die gleiche Funktionalität wie bei, in oder direkt am Abzweig angeordneten einzelnen Klappen erreicht wird.

Ferner können die Gehäusewerkzeuge kostengünstiger ausgeführt werden, da die Klappenanschläge in den Abgängen entfallen. Diese sind bevorzugt im Einlegeteil integriert, wodurch sich die Komplexität der Werkzeuge verringert.

Bevorzugt ist die Klappe in einem zentralen Bereich des Gehäuses an einem in das Gehäuse eingebrachten Einlegeteil angeordnet.

Mindestens zwei Klappen sind vorzugsweise vorgesehen, welche die gleiche Drehachse aufweisen, wobei die beiden Klappen bevorzugt der gleichen Klimazone angehören. Hierbei handelt es sich vorzugsweise um die oben genannte zentrale Fussraum-Kiappe und eine Fond-Belüftungs-Klappe. Durch die Kombination dieser beiden Klappen vereinfacht sich die Ansteuerung und Betätigung der Klappen mit einem Stellantrieb. Ferner wird die kinematische Kette verkleinert, wodurch die Hysterese verringert werden kann.

Bevorzugt sind die beiden Klappen in einem festen Winkel zueinander angeordnet, wobei der Winkel vorzugsweise ungleich Null Grad ist, d.h. die Flächen der beiden Klappen sind zueinander geneigt.

Gemäß einer alternativen Ausführungsform kann zwischen einzelnen Klappen eine Getriebeübertragung vorgesehen sein, welche insbesondere im Inneren des Gehäuses angeordnet ist.

Es ist aber auch möglich Wellenachsen der Klappen versetzt zueinander anzuordnen. Die Kopplung kann in einem solchen Fall beispielsweise über Hebel erfolgen.

Die erforderliche kinematische Steuerung der Klappen (Klappenablaufprogramm) kann über Kulissen bzw. Variation der Klappenform, Länge, Verschränkungswinkel zueinander, etc. erreicht werden.

Vorzugsweise zweigen die Luftkanäle zu den einzelnen Auslassöffnungen in den Fahrzeuginnenraum in Luftströmungsrichtung gesehen nach den Klappen vom zentralen Bereich des Gehäuses ab.

Bevorzugt ist ein separater Schichtungskanal ausgebildet, durch den je nach Bedarf kühlere oder wärmere Luft in den Bereich Fahrzeuginnenraum führbar ist. Dies ermöglicht eine verbesserte Schichtung der Luft. Durch eine Kombination der zentralen Fussraum-Klappe mit einem Schichtungskanal kombiniert wird die Anordnung sehr flexibel einsetzbar, so dass Änderungen während des Entwicklungs- und Serienprozesses vereinfacht durchgeführt werden können. In die geforderte Luft- und Temperaturverteilung der Anlage kann auf einfache Weise Einfluss genommen werden.

Die Offenbarungen der nachveröffentlichten DE 102 61 036 A1, insbesondere in Hinblick auf einen separaten Schichtungskanal, durch den kühle Luft in den Bereich der Fondbelüftung führbar ist, sowie der ebenfalls nachveröffentlichten DE 102 61 037 A1, insbesondere in Hinblick auf die Luftströmungspfade oder Luftkanäle und die Funktion der Klappen, werden ausdrücklich einbezogen, auch wenn in der Beschreibung hierauf nicht näher eingegangen wird.

Im Folgenden wird die Erfindung anhand eines Ausführungsbeispiels unter Bezugnahme auf die Zeichnung im Einzelnen erläutert. In der Zeichnung zeigen:

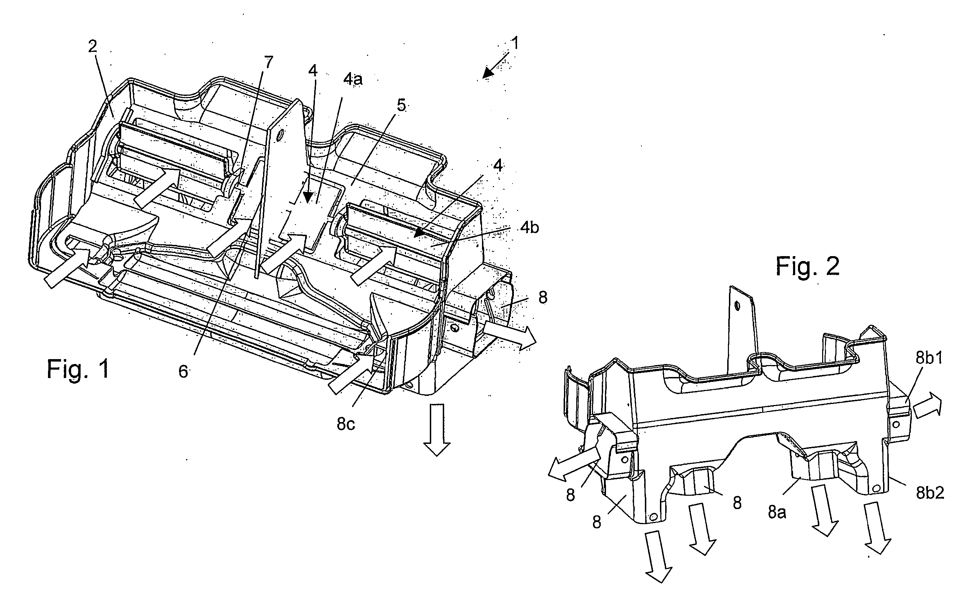

- Fig. 1: den zentralen Bereich einer erfindungsgemäßen Belüf- tungsvorrichtung in offener, perspektivischer Darstellung,
- Fig. 2: eine Ansicht von Fig. 1 aus einer anderen Perspektive,

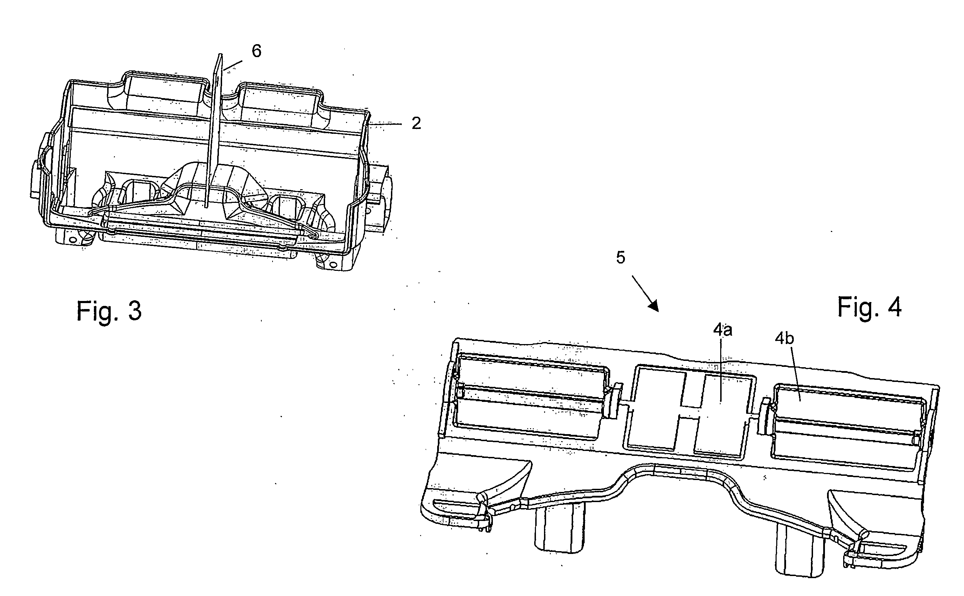

- Fig. 3: eine Ansicht des Gehäuses ohne Einlegeteil mit Klappen, und
- Fig. 4: eine Ansicht des Einlegeteils mit Klappen ohne Gehäuse.

Eine erfindungsgemäße Belüftungsvorrichtung 1 einer zweizonigen Klimaanlage eines Kraftfahrzeugs weist ein Gehäuse 2, das der Luftführung dient und in dem unter anderem ein Gebläse, eine Heizung und ein Verdampfer angeordnet sind, eine Mehrzahl von Luftkanälen (die Abgänge hierzu sind mit dem Bezugszeichen 8 bezeichnet) und in einem zentralen Bereich angeordnete Klappen 4 auf, welche an einem Einlegeteil 5 angebracht sind, das in das Gehäuse 2 eingelegt und hierin fixiert ist.

Der Aufbau ist vorliegend achssymmetrisch bezüglich einer am Gehäuse 2 vorgesehenen Trennwand 6, welche die Fahrerseite von der Beifahrerseite trennt, so dass im Folgenden nur eine Seite beschrieben ist. Im Gehäuse 2 ist benachbart zur Trennwand 6 eine Fond-Belüftungs-Klappe 4a angeordnet. Diese steuert die Luftzufuhr zu einem Luftkanal, welcher der FondBelüftung dient. Diese Klappe 4a ist etwa rechteckförmig ausgebildet und quer zu ihrer Längsrichtung um eine Drehachse schwenkbar. Sie ist achssymmetrisch zur Drehachse ausgebildet.

Fest mit dieser Fond-Belüftungs-Klappe 4a über eine starre, entlang der Drehachse verlaufende Achse 7 verbunden ist eine Fussraum-Klappe 4b, so dass beide Klappen 4 um die gleiche Drehachse schwenkbar sind. Die beiden Klappen 4a und 4b sind um etwa 60° verdreht zueinander angeordnet. Die starre Achse 7 ist im Bereich der Trennwand 6 unterbrochen, so dass die beiden Zonen der Klimaanlage getrennt und unabhängig voneinander gesteuert werden können. Die Ansteuerung erfolgt gemäß dem vorliegenden Ausführungsbeispiel von beiden Seiten mit einem Stellantrieb. Alternativ kann beispielsweise auch eine Kopplung mit einer anderen Klappe am Klimagerät vorgesehen sein.

In Luftströmungsrichtung hinter den Klappen 4 angeordnet sind im Gehäuse 2 verschiedene Abgänge 8 vorgesehen, durch welche die durch die Klappen 4 gesteuerten Luftströme den entsprechenden Luftdüsen des Fahrzeuginnenraums zugeführt werden. Hierbei ist der Abgang 8 zur Fondbelüftung, durch den der durch die Fond-Belüftungs-Klappe 4a gesteuerte Luftstrom zum Fahrzeuginnenraum strömt, mit dem Bezugszeichen 8a versehen.

Über die Fussraum-Klappe 4b werden die beiden Abgänge 8b1 zum vorderen Fussraum, d.h. dem Front-Fussraum, und 8b2 zum Fond-Fussraum mit entsprechend temperierter Luft versorgt, weshalb auf diese Fussraum-Klappe 4b auch als zentrale Fussraum-Klappe Bezug genommen wird. Auf Grund dieser zentralen Fussraum-Klappe sind keine einzelnen Klappen in den jeweiligen Abgängen erforderlich.

Im Gehäuse 2 ist ferner ein Abgang 8c zu einem Schichtungskanal (nicht näher dargestellt) vorgesehen, wie er in der DE 102 61 036 A1 näher beschrieben ist.

### Bezugszeichenliste

- 1: Belüftungsvorrichtung
- 2: Gehäuse
- 4: Klappe
- 4a: Fond-Belüftungs-Klappe
- 4b: Fussraum-Klappe
- 5: Einlegeteil
- 6: Trennwand
- 7: Achse
- 8: Abgang
- 8a: Abgang Fondbelüftung
- 8b1: Abgang Front-Fussraum
- 8b2: Abgang Fond-Fussraum
- 8c: Abgang Schichtungskanal

## Patentansprüche

1. Belüftungsvorrichtung, insbesondere für eine Heizungs- oder Klimaanlage eines Kraftfahrzeugs, mit in einem Gehäuse (2) angeordneten Klappen (4), die Luftströme steuern, welche über Abgänge (8) einzelnen Lurtkahälen zum Fahrzeuginnenraum zugeführt werden, wobei eine zentrale Fussraum-Klappe (4b) den Luftstrom über einzelne Luftkanäle zum Front-Fussraum und zum Fond-Fussraum des Fahrzeuginnenraums steuert,
**dadurch gekennzeichnet dass** mindestens eine weitere Klappe (4) vorgesehen ist, welche die gleiche Drehachse wie die der zentralen Fussraum-Klappe (4b) aufweist.

2. Belüftungsvorrichtung nach Anspruch 1, **dadurch gekennzeichnet, dass** die Klappe (4b) in einem zentralen Bereich des Gehäuses (2) an einem in das Gehäuse (2) eingebrachten Eintegeteil (5) angeordnet ist.

3. Belüfturlgsvortichtung einem der vorhergehenden Ansprüche, **dadurch gekennzeichnet, dass** die Klappen (4a und 4b) in einem festen Winkel zueinander angeordnet sind.

4. Belüftungsvorrichtung nach Ansprüch 3, **dadurch gekennzeichnet, dass** der Winkel zwischen den beiden Klappen (4a und 4b) größer als 0° ist.

5. Belüftungsvorrichtung nach einem der Ansprüche 1 bis 3, **dadurch gekennzeichnet, dass** zwischen einzelnen Klappen eine Getriebeübertragung vorgesehen ist, weiche im Inneren des Gehäuses angeordnet ist.

6. Belüftungsvorrichtung nach einem der vorhergehenden Ansprüche, **dadurch gekennzeichnet, dass** Luftkanäle zu den einzelnen Auslassöffnungen in den Fahrzeuginnenraum in Luftströmungsrichtung gesehen nach den Klappen (4a, 4b) vom zentralen Bereich des Gehäuses abzweigen.

7. Belüftungsvorrichtung nach einem der vorhergehenden Ansprüche, **dadurch gekennzeichnet, dass** ein separater Schichtungskanal ausgebildet ist, durch den kühle Luft in den Bereich Fahrzeuginnenräurn führbar ist.

8. Belüftungsvorrichtung nach einem der vorhergehenden Ansprüche, **dadurch gekennzeichnet, dass** bei einer mehrzonigen Klimmaanlage eine zonenspezifische Ansteuerung der Klappe(n) (4b) vorgesehen ist.

9. Belüftungsvorrichtung nach einem der vorhergehenden Ansprüche, **dadurch gekennzeichnet, dass** eine starre Kopplung der Fussraum-Klappe (4b) mit einer Fond-Belüftungs-Klappe (4a) für jede Klimazone vorgesehen ist.

## Claims

1. A ventilation device, especially for a heating or air conditioning system of a motor vehicle, comprising flaps (4) which are arranged in a housing (2) and which guide flows of air that are supplied via outlets (8) to individual air ducts towards the passenger compartment, a central leg room flap (4b) which guides the flow of air via individual air ducts to the front leg room and rear leg room of the passenger compartment, **characterized in that** at least one further flap (4a) is provided which has the same rotational axis as the one of the central leg room flap (4b).

2. The ventilation device according to claim 1, **characterized in that** the flap (4b) is arranged on an insert part (5) integrated in the housing (2) in a central area of the housing (2).

3. The ventilation device according to any one of the preceding claims, **characterized in that** the flaps (4a and 4b) are arranged at a fixed angle to one another.

4. The ventilation device according to claim 3, **characterized in that** the angle between the two flaps (4a and 4b) is greater than 0°.

5. The ventilation device according to any one of the claims 1 to 3, **characterized in that** between individual flaps, a gear transmission is provided which is arranged inside the housing.

6. The ventilation device according to any one of the preceding claims, **characterized in that** air ducts to the individual outlet openings into the passenger compartment branch off downstream of the flaps (4a, 4b), viewed in direction of the air flow, from the central area of the housing.

7. The ventilation device according to any one of the preceding claims, **characterized in that** a separate stratification duct is formed through which cool air can be guided into the passenger compartment.

8. The ventilation device according to any one of the preceding claims, **characterized in that** in a multizone air conditioning system, a zone-specific control of the flap(s) (4b) is provided.

9. The ventilation device according to any one of the preceding claims, **characterized in that** a rigid coupling of the leg room flap (4b) with a rear ventilation flap (4a) is provided for each climate zone.

## Revendications

1. Dispositif de ventilation, en particulier pour un système de chauffage ou de ventilation d'un véhicule automobile, comprenant des volets (4), disposés dans un carter (2), qui régulent des flux d'air qui sont fournis à l'habitacle du véhicule par des sorties (8) de différents conduits d'air, où un volet central (4b) situé dans l'espace pour les pieds régule, dans l'habitacle du véhicule, le flux d'air fourni par différents conduits d'air, à l'espace pour les pieds situé à l'avant et à l'espace pour les pieds situé à l'arrière,
**caractérisé en ce qu'**il est prévu au moins un autre volet (4a) qui présente le même axe de rotation que celui du volet central (4b) situé dans l'espace pour les pieds.

2. Dispositif de ventilation selon la revendication 1, **caractérisé en ce que** le volet (4b) est disposé, dans une zone centrale du carter (2), sur une pièce d'insertion (5) introduite dans le carter (2).

3. Dispositif de ventilation selon la revendication 1 ou 2, **caractérisé en ce que** les volets (4a et 4b) sont disposés en formant un angle fixe l'un par rapport à l'autre.

4. Dispositif de ventilation selon la revendication 3, **caractérisé en ce que** l'angle formé entre les deux volets (4a et 4b) est supérieur à 0°.

5. Dispositif de ventilation selon l'une quelconque des revendications 1 à 3, **caractérisé en ce qu'**il est prévu, entre différents volets, une transmission à engrenage qui est disposée à l'intérieur du carter.

6. Dispositif de ventilation selon l'une quelconque des revendications précédentes, **caractérisé en ce que** des conduits d'air menant aux différentes ouvertures de sortie placées dans l'habitacle du véhicule bifurquent par rapport à la zone centrale du carter, en aval des volets (4a, 4b), en regardant dans la direction d'écoulement de l'air.

7. Dispositif de ventilation selon l'une quelconque des revendications précédentes, **caractérisé en ce qu'**un conduit de répartition est configuré de façon séparée, conduit de répartition à travers lequel de l'air froid peut être fourni dans la zone de l'habitacle du véhicule.

8. Dispositif de ventilation selon l'une quelconque des revendications précédentes, **caractérisé en ce que**, dans le cas d'un système de climatisation à plusieurs zones, il est prévu un actionnement du ou des volet (s) (4b), spécifique pour chaque zone.

9. Dispositif de ventilation selon l'une quelconque des revendications précédentes, **caractérisé en ce qu'**il est prévu, pour chaque zone de climatisation, un couplage fixe du volet (4b) situé dans l'espace pour les pieds, à un volet de ventilation (4a) situé à l'arrière.
